Europäisches Patentamt

European Patent Office

Office européen des brevets

(11) Numéro de publication: **0 379 408**
**A2**

## (12) DEMANDE DE BREVET EUROPEEN

(21) Numéro de dépôt: **90400098.1**

(22) Date de dépôt: **15.01.90**

(51) Int. Cl.⁵: **G05B 19/04**

(30) Priorité: **16.01.89 FR 8900440**
**12.01.90 FR 9000347**

(43) Date de publication de la demande:
**25.07.90 Bulletin 90/30**

(84) Etats contractants désignés:
**AT BE CH DE DK ES GB GR IT LI LU NL SE**

(71) Demandeur: **S.A. FRANCEL**
**11, rue H. Brault**
**F-49480 Saint Sylvain d'Anjou (Maine et Loire)(FR)**

(72) Inventeur: **Régnier, Christian**
**14 Chemin du Nid de Pie**
**49000 Angers(FR)**

(74) Mandataire: **Cabinet Pierre HERRBURGER**
**115, Boulevard Haussmann**
**F-75008 Paris(FR)**

(54) **Dispositif à commande numérique des fonctions de machines à fonctions multiples, notamment des fonctions de machines-outils.**

(57) Dispositif de commande numérique des fonctions de machines à fonctions multiples, notamment des fonctions de machines-outils, dispositif caractérisé en ce qu'il se compose d'une interface (1) pourvue d'une prise d'entrée de données (3) réalisée de manière telle qu'elle permet son branchement sur la prise de sortie (4) imprimante, d'un ordinateur, cette interface comprenant un registre à n éléments reliés chacun, côté entrée à une brone de cette prise d'entrée de données (3) et, côté sortie à un relais de commande d'une fonction par l'intermédiaire d'un transistor-amplificateur.

FIG.1

## Dispositif à commande numérique des fonctions de machines à fonctions multiples, notamment des fonctions de machines-outils

L'invention concerne un dispositif à commande numérique des fonctions de machines à fonctions multiples, notamment des fonctions de machines-outils.

On connaît déjà par le brevet français N° 2 598 829 un dispositif de commande domestique à usage général qui, en se branchant sur la sortie imprimante d'un ordinateur, permet d'assurer la commande de plusieurs fonctions. Ce dispositif comprend un décodeur dont chacune des huit sorties est reliée à une bascule suivie d'un filtre pour mettre ou non sous tension des prises de courant ou des appareils électroménagers divers.

Une telle construction n'est cependant pas adaptée à la commande de machines-outils dans la mesure où pour faire changer d'état l'une des sorties du décodeur et donc une seule bascule, il est nécessaire d'amener une combinaison de données sur la totalité des entrées. Ainsi, pour la mise en marche ou l'arrêt des huit fonctions, il est nécessaire de présenter à l'entrée du décodeur huit combinaisons successives de données. Une telle construction, si elle est acceptable pour la commande d'appareils électroménagers, est donc inacceptable pour la commande de machines-outils dont les fonctions doivent pouvoir être commandées simultanément à des moments précis.

La présente invention a pour but de remédier à ces inconvénients et concerne à cet effet un dispositif à commande numérique des fonctions des machines à fonctions multiples, notamment des fonctions de machines-outils, caractérisé en ce qu'il se compose d'une interface pourvue d'une prise d'entrée de données réalisée de manière telle qu'elle permet son branchement sur la prise de sortie imprimante, d'un ordinateur, cette interface comprenant un registre à n éléments reliés chacun, côté entrée à une borne de cette prise d'entrée de données et, côté sortie à un relais de commande d'une fonction par l'intermédiaire d'un transistor-amplificateur.

Suivant une autre caractéristique de l'invention, le registre se compose d'un module de registre divisé en deux groupes comportant chacun une diode d'inversion, les entrées des éléments de chaque groupe étant reliées aux sorties d'un démultiplexeur de capacité correspondante, dont les voies d'entrée sont reliées chacune à la prise d'entrée de données reliée à la prise de sortie imprimante de l'ordinateur.

L'invention est représentée à titre d'exemple non limitatif sur les dessins ci-joints dans lesquels :

- la figure 1 est un dessin synoptique d'ensemble du dispositif à commande numérique des fonctions d'une machine-outil,

- la figure 2 représente le schéma de principe de l'interface de la figure 1,

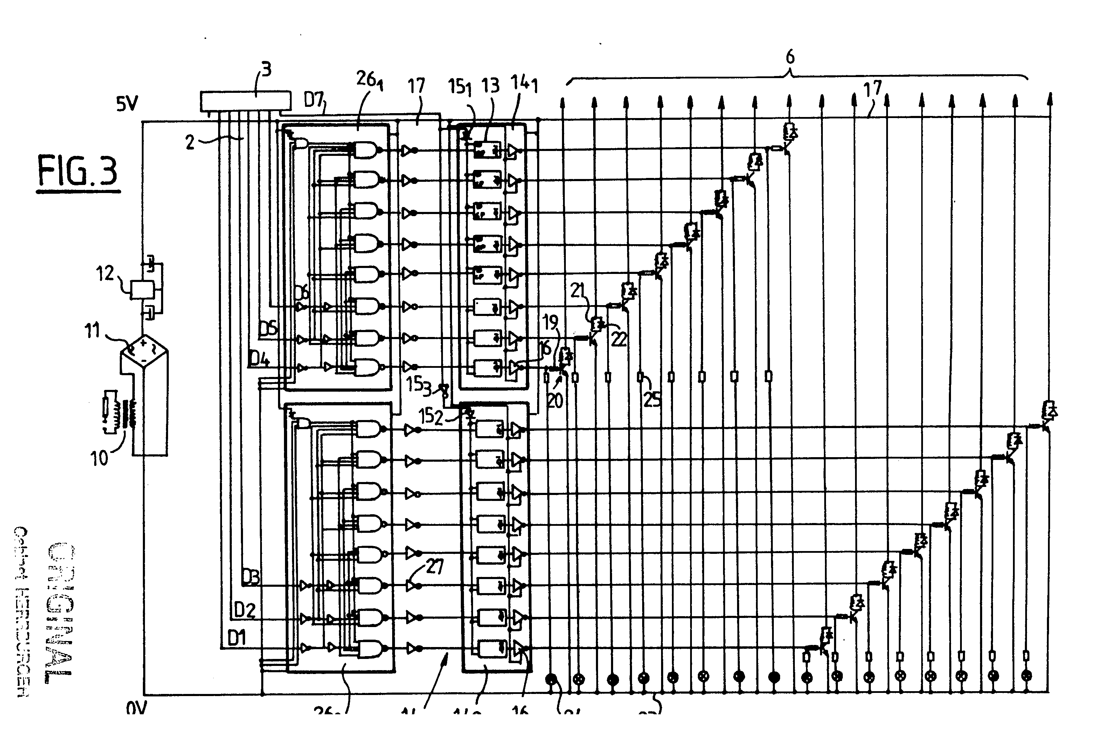

- la figure 3 représente le schéma de principe d'un autre mode de réalisation de l'interface de la figure 1.

La présente invention a en conséquence pour but la réalisation d'un dispositif de construction simple et peu coûteux, qui puisse se brancher directe ment sur tout ordinateur afin d'assurer simultanément la commande des diverses fonctions d'une machine à fonctions multiples et, notamment, des diverses fonctions d'une machine-outil à partir du programme de commande contenu dans l'unité centrale de l'ordinateur.

Ainsi, dans le cas d'une machine-outil, ce dispositif de commande pourra assurer la commande de la direction de la vitesse et de l'amplitude du déplacement relatif de l'outil et de la pièce suivant les diverses trajectoires déterminées par la construction de la machine, ainsi que l'entraînement de l'outil, le changement de cet outil, l'alimentation de la machine en ébauches de pièces, l'évacuation de ces pièces, etc., ces commandes pouvant être effectuées simultanément, comme cela est nécessaire, pour obtenir la précision et la rapidité souhaitées dans le positionnement d'un outil et l'exécution d'un travail.

Ce dispositif se compose d'une interface 1 dont les divers conducteurs d'entrée 2 sont reliés chacun à une borne d'une prise 3, cette prise 3 étant établie de façon à pouvoir s'assembler avec la prise de sortie imprimante 4 prévue sur tout ordinateur 5. Les conducteurs de sortie 6 de l'interface 1 sont reliés chacun à un organe moteur (non représenté) assurant l'exécution d'une fonction d'une machine-outil 7.

Des capteurs (non représentés) sont prévus sur la machine-outil afin de contrôler l'exécution des diverses fonctions (vitesse, amplitude et direction des déplacements relatifs de l'outil de la pièce, vitesse de l'outil, etc., les informations issues de chaque capteur étant amenées sur l'une des broches d'une prise 8 réalisée de manière à s'assembler sur la prise 9 d'entrée de données de l'ordinateur 5.

On notera que ce dispositif, particulièrement intéressant en raison de sa simplicité et de son faible coût de réalisation, est remarquable également dans la mesure où il constitue un dispositif évolutif et adaptable à tout micro-ordinateur dont les plus simples et, donc, les moins coûteux, sont dotés d'une prise de sortie imprimante et d'une prise d'entrée de données d'une manette de jeux.

Ce dispositif est également d'une grande souplesse de fonctionnement, dans la mesure où pour l'utilisation et la programmation, le langage reste celui du micro-ordinateur auquel est reliée l'interface.

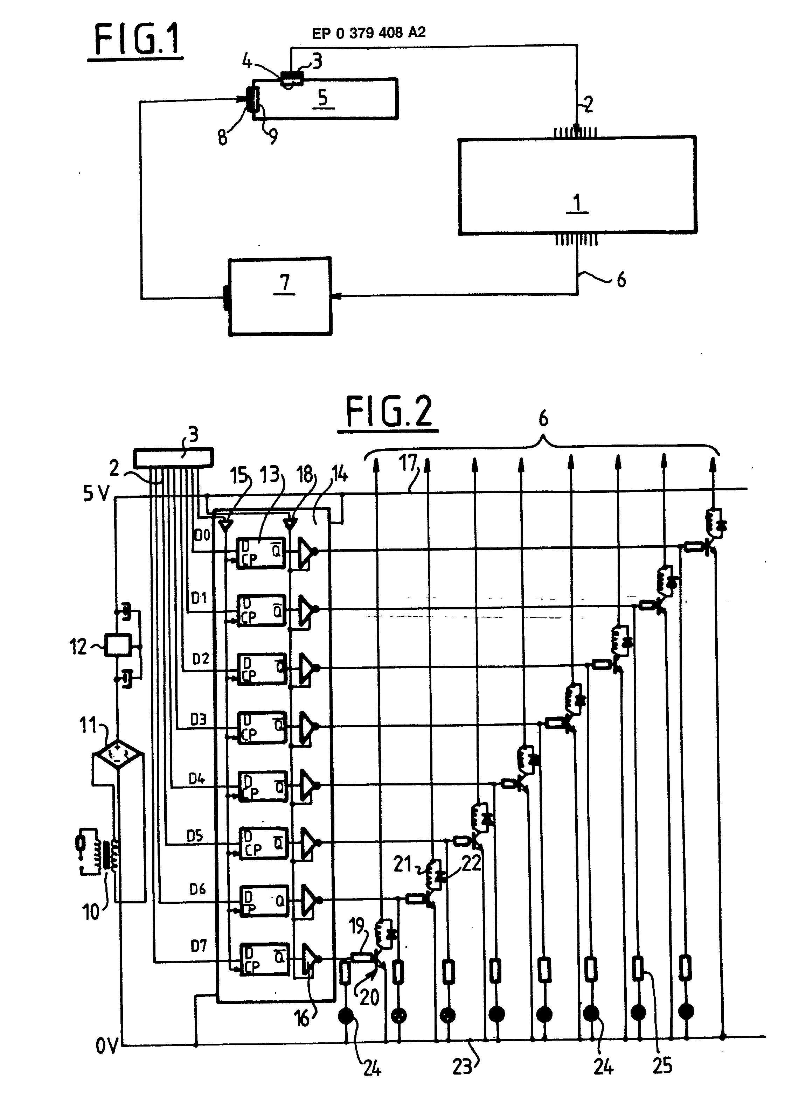

Cette interface (voir figure 2) comprend une alimentation se composant d'un transformateur abaisseur 10, d'un redresseur en pont fermé 11 et d'un ensemble de filtrage et de régulation de tension 12.

La prise 3 complémentaire de la prise 4, de sortie imprimante, de l'ordinateur 5 est reliée aux n éléments 13 d'un registre 14, l'entrée de chaque élément 13 étant, à cet effet, reliée à une broche de la prise 3.

L'une des broches de ces prises complémentaires 3, 4 sur laquelle apparaît le signal d'horloge de l'ordinateur 5, est reliée à chaque élément 13 par l'intermédiaire d'une diode de protection 15.

La sortie de chaque élément 13 comporte des inverseurs de sortie 16 qui sont alimentés en parallèle à partir de la polarité positive 17 de l'alimentation, par l'intermédiaire d'une diode d'inversion 18.

Les inverseurs de sortie 16 sont reliés chacun par une résistance 19 à la base d'un transistor 20 dont chaque collecteur est relié à un circuit parallèle comprenant un relais 21 et une diode de protection d'inversion de courant 22.

L'émetteur de ces transistors 20 est relié à la polarité négative 23 de l'alimentation de façon que les relais 21 reliés par la liaison 6 aux différents organes moteurs de la machine-outil 7, puissent assurer la commande des diverses fonctions de cette machine-outil. La mise en oeuvre de ces relais combinés aux registres permet donc, pour chacune des voies de sortie, de commander des tensions différentes suivant les besoins des organes moteurs des machines-outils auxquels ces relais sont raccordés.

La sortie de chaque inverseur 16 est également reliée à la polarité négative de l'alimentation par une résistance 25 et une diode électroluminescente 24 pour la mise en évidence de l'arrivée de l'instruction de commande d'une fonction.

Le fonctionnement de ce dispositif est le suivant.

Les données disponibles sur la prise 4, de sortie imprimante, de l'ordinateur, sont amenées chacune à l'entrée d'un élément 13 du registre 14 où elles sont transférées en sortie de ces éléments lorsque le signal d'horloge qui est amené depuis le micro-ordinateur 5 à chaque élément 13 par l'inverseur 15, passe au niveau haut.

Dans l'exemple représenté, le registre 14 est un registre à 8 bits mais, bien entendu, il pourra si désiré être remplacé par un registre à 16 ou 32 bits si l'on désire augmenter la capacité de gestion.

Suivant l'invention, les ordres émis à partir du micro-ordinateur et qui correspondent à un poids numérique déterminé d'un nombre binaire, sont reçus par le registre parallèle 14. A chaque cycle d'horloge du micro-ordinateur 5, le registre effectue le transfert de ces ordres vers les transistors de puissance qui jouent le rôle d'amplificateurs de courant pour actionner les relais 21.

Un ordre donné au registre correspond donc à l'utilisation d'une ou de plusieurs voies logiques, chaque bascule du registre intervenant selon le code binaire reçu. Dans l'exemple représenté, une combinaison de huit bits envoyée sur le bus de sortie imprimante de l'ordinateur, permet donc de commander simultanément de multiples fonctions (de une à huit dans cet exemple).

Les exécutions des fonctions par la machine-outil 7 sont appréciées par les capteurs de cette machine-outil, de façon que les signaux correspondants soient ramenés dans le micro-ordinateur par les prises 8, 9.

Selon le poids du mot binaire résultant de ces capteurs, le micro-ordinateur envoie une commande appropriée vers l'interface pour corriger, compléter ou modifier l'exécution de la ou des fonctions et cela en fonction du programme de travail de cet ordinateur.

Ce dispositif permet également d'une manière simple de doubler le nombre des commandes simultanées de fonctions. L'interface de ce dispositif comprend dans ce cas un registre 14 réalisé sous la forme d'un module de registre, divisé en deux groupes $14_1$ et $14_2$. Dans l'exemple représenté, chaque registre comporte une diode de protection $15_1$ et $15_2$.

La sortie de chaque élément 13 des deux groupes comporte des inverseurs de sortie 16 qui sont alimentés en parallèle à partir de la polarité positive 17 de l'alimentation.

Les entrées des éléments 13 de chaque groupe $14_1$, $14_2$ sont reliées par l'intermédiaire de diodes d'inversion 27 à un démultiplexeur $26_1$ respectivement $26_2$ de capacité correspondante, dont un exemple de structure est représenté sur cette figure 2. Ces diodes 27 sont prévues pour transformer le signal de niveau actif bas qui sort des démultiplexeurs en un signal de niveau actif haut pour qu'il soit exploitable par les groupes de registre.

Dans l'exemple représenté, chaque groupe $14_1$, $14_2$ du registre comporte huit éléments 13 et chacun des démultiplexeurs $26_1$, $26_2$ comporte trois voies d'entrée $D_4$, $D_5$, $D_6$ respectivement $D_1$, $D_2$, $D_3$ dont chacune des huit voies de sortie est reliée à l'entrée d'un élément 13 d'un groupe de registre $14_1$, $14_2$ par une diode d'inversion 27. Ainsi, dans cette construction, la prise 3 complémentaire de la prise 4 de sortie imprimante de l'ordinateur 5, est reliée pour les données $D_1$ à $D_6$

à deux démultiplexeurs trois voies vers huit.

La broche $D_7$ de cette prise 3, sur laquelle apparaît le bit de poids fort des données, est reliée aux divers éléments 13 des deux groupes de registres ainsi montés en parallèle, par les diodes $15_1$, $15_2$ et la diode d'inversion $15_3$.

Les deux groupes de registre sont ainsi fonction de l'état de la donnée de la ligne $D_7$ de sortie de la prise imprimante. Si $D_7 = 0$ les données à l'entrée de l'un des groupes de registre sont passantes alors que les données précédentes sont maintenues en sortie de l'autre groupe de registre.

Dans l'exemple représenté, les groupes de registres $14_1$, $14_2$ comportent chacun huit éléments mais bien entendu on pourra les remplacer par des groupes de registre à 16 ou 32 bits si l'on désire augmenter la capacité de gestion et, dans ce cas, les démultiplexeurs $26_1$, $26_2$ présenteront une capacité correspondante.

Les ordres émis à partir du micro-ordinateur et qui correspondent à un poids numérique déterminé d'un nombre binaire, sont reçus par les deux démultiplexeurs $26_1$, $26_2$ et sont transférés à l'un ou l'autre des groupes $14_1$, $14_2$ qui commande alors les transistors de puissance 20 jouant le rôle d'amplificateurs de courant pour actionner les divers relais 21 en suivant le programme de l'ordinateur.

Cette disposition permet donc de doubler les commandes obtenues par l'intermédiaire de l'interface.

## Revendications

1) Dispositif de commande numérique des fonctions de machines à fonctions multiples, notamment des fonctions de machines-outils, dispositif caractérisé en ce qu'il se compose d'une interface (1) pourvue d'une prise d'entrée de données (3) réalisée de manière telle qu'elle permet son branchement sur la prise de sortie (4) imprimante, d'un ordinateur, cette interface comprenant un registre (14) à n éléments (13) reliés chacun, côté entrée à une borne de cette prise d'entrée de données (3) et, côté sortie à un relais de commande (21) d'une fonction par l'intermédiaire d'un transistor-amplificateur (20).

2) Dispositif conforme à la revendication 1, caractérisé en ce que le registre (14) se compose d'un module de registre divisé en deux groupes ($14_1$, $14_2$) comportant chacun une diode d'inversion ($15_1$, $15_2$), les entrées des éléments (13) de chaque groupe étant reliées aux sorties d'un démultiplexeur ($26_1$, $26_2$) de capacité correspondante, dont les voies d'entrée sont reliées chacune à la prise d'entrée de données (3) reliée à la prise de sortie imprimante (4) de l'ordinateur.

3) Dispositif conforme à l'une quelconque des revendications précédentes, caractérisé en ce qu'une diode (22) de protection contre les inversions de courant, est disposée en parallèle sur chaque relais (21).

4) Dispositif conforme à l'une quelconque des revendications 1 ou 2, caractérisé en ce qu'une diode électro-luminescente (24) est reliée à la base de chaque transistor pour la mise en évidence d'un ordre de commande d'une des fonctions aboutissant à ces transistors.

5) Dispositif conforme à l'une quelconque des revendications 1 ou 2, caractérisé en ce que des capteurs de contrôle d'exécution de fonction sont prévus sur la machine (7), chaque capteur étant relié à la prise d'entrée de données (9) de l'ordinateur (5).

# FIG.1

EP 0 379 408 A2

# FIG.2

# FIG.3

EP 0 379 408 A2